# EUROPEAN PATENT APPLICATION

(11) **EP 1 679 606 A1**
(43) Date of publication of application: **12.07.2006**
(21) Application number: 04793018.5
(22) Date of filing: 27.10.2004
(51) Int. Cl.: G06F 13/00

(54) **A METHOD FOR TRANSMITTING E-MAIL AND MOBILE COMMUNICATION TERMINAL**

(30) Priority: 31.10.2003 JP 2003372273
(71) Applicant: Vodafone K.K., Minato-ku, Tokyo 1056205 (JP); SHARP KABUSHIKI KAISHA, Osaka-shi, Osaka 545-8522 (JP)
(72) Inventor: IKEGAYA, Akiko, c/o Vodafone K.K., Tokyo 1056205 (JP); MIZOGUCHI, Hirosato, c/o Vodafone K.K., Tokyo 1056205 (JP); MUTOU, Akira, c/o Vodafone K.K., Tokyo 1056205 (JP); NOZU, Takuya, c/o Sharp Co., Ltd., Osaka-shi, Osaka 5458522 (JP); GOTOU, Shin-ichi, c/o Sharp Co., Ltd., Osaka-shi, Osaka 5458522 (JP)
(74) Representative: Grünecker, Kinkeldey, Stockmair & Schwanhäusser Anwaltssozietät
(86) International application number: PCT/JP2004/015906
(87) International publication number: WO 2005/043397

(57) **Abstract**

In the event that the predetermined transmission failure occurs in consecutive transmission of a plurality of e-mails intended for transmission, consecutive transmission of e-mails for which the predetermined transmission failure has occurred and e-mails for which transmission was not started at the time of the occurrence of the predetermined transmission failure is tried automatically (step 116). As a result, in the event that a predetermined transmission failure occurs so that all of the e-mails it was intended to transmit cannot be transmitted, without any annoyance to the user, transmission of e-mails is attempted automatically with the exception of e-mails transmitted the first time for which transmission is completed. As a result, it is possible to increase the usefulness to the user of mobile communication terminal during transmission of e-mail.

## Description

### Technical Field

The present invention relates to an e-mail transmission method and mobile communication terminal, and particularly relates to an e-mail transmission method where a mobile communication terminal transmits e-mail, and a mobile communication terminal using the e-mail transmission method.

### Background Art

Mobile terminal apparatus such as portable telephones have become widespread in recent years. Such mobile terminal generally have an e-mail function (create e-mail, transmit and receive e-mail, display content of received e-mail, and so forth) in addition to voice communication functions, and are prevalent in transmission and receipt of e-mail utilized in mobile terminal apparatus.

Various technologies have been put forward to promote usefulness to the user in transmission and receipt of e-mail by such mobile terminal apparatus. Technology for automatically transmitting e-mail in a wait state using an event depending on an electric field level changing from out of range to in range (refer to patent document 1) and technology for determining amount of data for e-mail or a combination of an e-mail transmitting and receiving party and electromagnetic wave conditions and then automatically executing transmission and receipt of e-mail (refer to patent document 2) exists as this technology.

Further, in addition to transmission of a single e-mail, consecutive transmission of a plurality of e-mails is also carried out (in the following, this is referred to as "automatic consecutive e-mail transmission"). During consecutive transmission of a plurality of e-mails, transmission instructions are executed after the user of the mobile communication terminal operates the operation section of the mobile communication terminal and selects the plurality of e-mails to be consecutively transmitted automatically.

### [Patent Document 1]

Japanese Patent Laid-open Publication No.2000-333256.

### [Patent Document 2]

Japanese Patent Laid-open Publication No.2002-44737.

### Disclosure of the Invention

### [Problems to be solved by the invention]

With the transmission of a single e-mails or the automatic consecutive transmission of a plurality of e-mails at the mobile communication terminal of the related art described above, the e-mail transmission operation stops, once a single transmission error occurs due to a communication error and so forth during transmission. Information for what caused the transmission failure to occur or transmission completion information indicating which e-mails of the plurality of e-mails transmission has been completed is displayed, and the automatic consecutive transmission operation for the e-mail is completed.

Because of this, when a transmission failure occurs during transmission of e-mail, transmission of all of the plurality of e-mails are initially intended to transmit stops. It is therefore necessary for the user to operate the operation section of the mobile communication terminal and carry out selection and transmission instructions for e-mail intended to transmit. Herein, as operations at the time of the occurrence of transmission failure during automatic consecutive transmission, an operation (i) of reselecting e-mail for which a transmission error occurred and e-mail for which transmission did not start at the time of the transmission failure and instructing automatic consecutive e-mail transmission of this e-mail, and an operation (ii) of selecting e-mail for which transmission failure occurred and e-mail for which transmission had not started at the time of the occurrence of the transmission failure, and so forth take place.

The present invention has been conceived in view of the above described situation, and an object of the present invention is to provide a e-mail transmission method capable of improving convenience to the user of a mobile communication terminal during transmission of e-mail.

Another object of the present invention is to provide mobile communication terminal capable of improving convenience for the user during transmission of e-mail.

### [Means for Solving The Problems]

From the first aspect, the present invention is a e-mail transmission method where mobile communication terminal transmits e-mail that comprises the step of, in the event that predetermined transmission failure occurs in consecutive transmission of at least one e-mail to be transmitted, performing an automatic transmission retry to automatically try consecutive transmission of e-mail subjected to predetermined transmission failure and e-mail that does not start transmission at the time of the occurrence of the transmission failure.

In this e-mail transmission method, when predetermined transmission failure occurs in consecutive transmission of at least one e-mail to be transmitted, consecutive transmission of e-mail subjected to predetermined transmission failure and e-mail that does not start transmission at the time of the occurrence of the transmission failure is automatically attempted, in an automatic transmission retry step. As a result, when a predetermined transmission failure occurs so that all of the e-mails intended to transmit cannot be transmitted, transmission of e-mails is attempted automatically, without any annoyance to the user, with the exception of e-mails transmitted the first time for which transmission is completed.

According to the e-mail transmission method of the present invention, convenience for the user of a mobile communication terminal is improved during transmission of e-mail.

In the e-mail transmission method of the present invention, transmission failures causing communication restrictions notified to the mobile communication terminal are not included in the predetermined transmission failure. In this case, for example, in the event that communication restrictions are imposed for the benefit of the public such as communication restrictions including restrictions on transmission of e-mail carried out via mobile stations to mobile communication terminal for disaster regions where a disaster has occurred, transmission is not retried automatically even if e-mail transmission failure occurs due to communication restrictions. Because of this, usefulness for the users of the mobile communication terminal is improved during transmission of e-mails within a range where there is no detriment to public benefit.

In the e-mail transmission method of the present invention, it is possible not to carry out display of transmission failure before execution of automatic transmission retry. In this event, when an automatic transmission retry step is carried out, displaying is not carried out to notify the user of the occurrence of transmission failure. This means that it is possible to prevent the user from being hindered by the providing of information generated as a result of transmission failure that is not essential that results from continued execution of an automatic transmission retry step.

Further, in the e-mail transmission method of the present invention, the automatic transmission retry step may be executed repeatedly up to a maximum predetermined number of times. In this event, it is possible to prevent from repeated unlimited retries of transmission caused by reasons that are undesirable in recovery for the time being. Further, in the event that transmission failure is the cause of communication congestion, it is possible to prevent a state of congestion from being encouraged to continue for a long time. Further, in the event that the number of retries is limited due to public standards, the automatic transmission retry operation may be satisfied with this standard.

In this case, when it is not possible to transmit entire of at least one e-mail even if the automatic transmission retry step is repeated the predetermined number of times, it is possible to further provide a step of displaying transmission complete conditions indicating e-mail transmission conditions. In this event, e-mail transmission conditions, which is information relating to e-mail transmitted in a stage where retrying of transmission of e-mail is completed, are displayed in the transmission complete conditions display step; thereby, it is possible for the user to be notified of e-mail transmission conditions that is essential information for the user at the time of completion of repeated execution of the automatic transmission retry step.

From the second point of view, the present invention is a transmission communication terminal having an e-mail transmission function comprises automatic transmission retry means when transmission failure is detected within consecutive transmission of the at least one e-mail to be transmitted; wherein the means automatically tries consecutive transmission of e-mail subjected to predetermined transmission failure and e-mail that does not start transmission at the time of the occurrence of the transmission failure of at least one e-mail to be transmitted.

With this mobile communication terminal, when predetermined transmission failure occurs in consecutive transmission of at least one e-mail to be transmitted, automatic transmission retry means automatically attempts consecutive transmission of e-mail subjected to predetermined transmission failure and e-mail that does not start transmission at the time of the occurrence of the transmission failure. Namely, the mobile communication terminal of the present invention carries out e-mail transmission using the e-mail communication method of the present invention described above.

Therefore, according to the mobile communication terminal of the present invention, the convenience to the user is improved during transmission of e-mail.

### Effect of the Invention

As described above, according to the e-mail communication method of the present invention, it is possible to improve convenience for the user of a mobile communication terminal during transmission of e-mail.

Further, according to the mobile communication terminal of the present invention, the convenience to the user is improved during transmission of e-mail.

### Brief Description of the Drawings

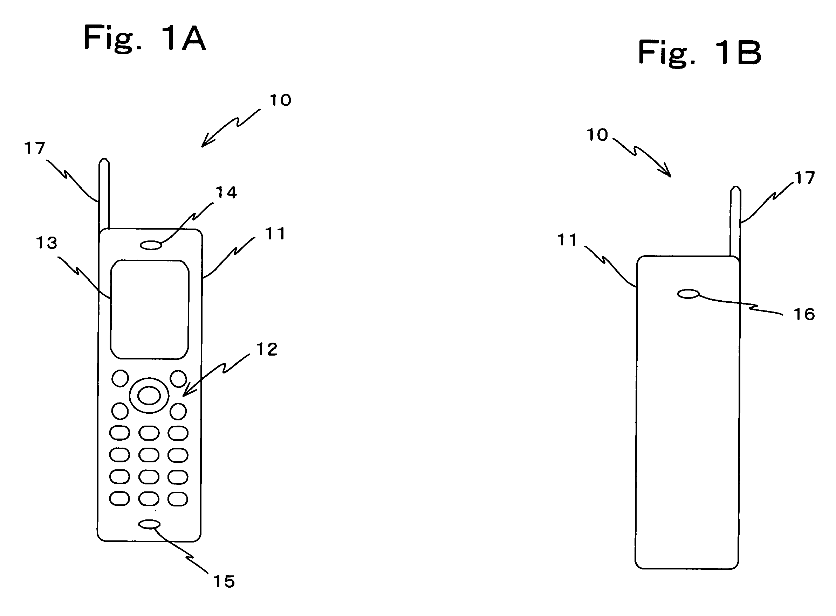

FIG. 1A is a view showing an outline of the external appearance of a structure from the front side of a mobile telephone of an embodiment of the present invention;
FIG. 1 Bis a view showing an outline of the external appearance of a structure from the back side of a mobile telephone of an embodiment of the present invention;
FIG. 2 shows functional block diagram for describing the internal structure of the mobile telephone of FIG. 1A and FIG. 1B;
FIG. 3 is a flowchart illustrating e-mail signal processing of an apparatus by the mobile telephone shown in FIG. 1A and FIG. 1B;
FIG. 4 is a view illustrating an example of a transmission complete condition display at the time of normal completion;
FIG. 5 is a view illustrating an example of transmission complete condition display occurring at the time of completion of an e-mail transmission operation due to transmission failure other than a predetermined transmission failure;
FIG. 6 is a flowchart illustrating processing occurring in the automatic transmission retry step of FIG. 3; and
FIG. 7 is a view illustrating an example of a transmission complete condition display at the time of completion of an e-mail transmission operation due to retry overflow.

### Best Mode For Carrying Out The Invention

One embodiment of the present invention will be described with reference to FIG. 1A - FIG. 7.

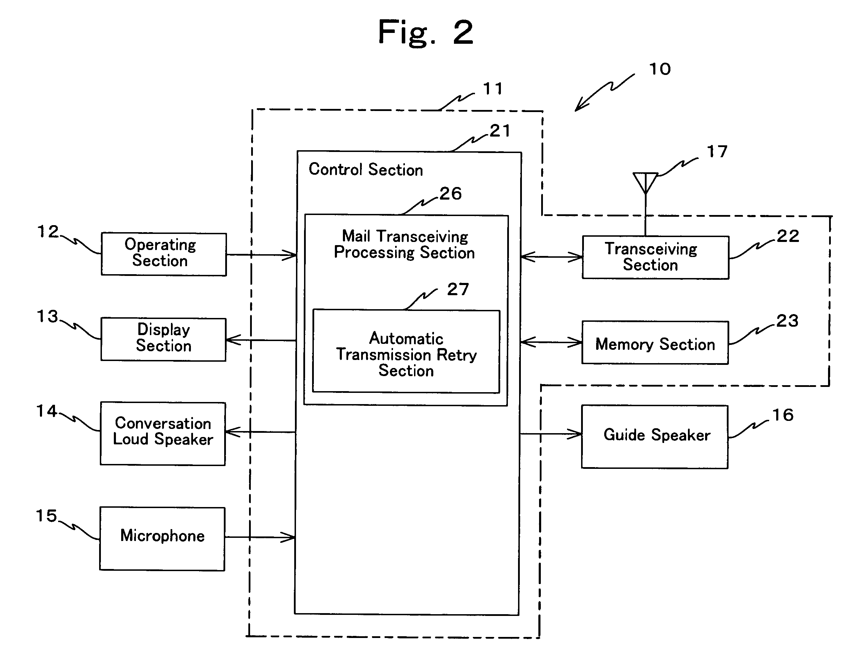

A configuration for a mobile telephone 10 constituting a mobile communication terminal of one embodiment is shown in outline in FIG. 1A, FIG. 1B and FIG. 2. A front view of the external appearance of the mobile telephone 10 is shown in FIG. 1A and a rear view of the external appearance of the mobile telephone 10 is shown in FIG. 1B. Further, a functional block structure of the mobile telephone 10 is shown in FIG. 2.

As shown comprehensively in FIG. 1A, FIG. 1 B and FIG. 2, the mobile telephone unit 10 is comprised of (a) a portable telephone body 11 provided with a control section 21, transceiver section 22, and storage section 23, (b) an operating section 12 having a numeric keypad for input of telephone numbers to the control section 21 and function keys for inputting various commands such as operation mode switching, to the control section 21, and (c) a display section 13 having a liquid crystal display for displaying operation guidance, operating status, received messages and so forth in response to commands from the control section 21.The portable telephone 10 is also comprised of (d) a call speaker 14 for reproducing voice signals transmitted from a calling party at the time of a call, a microphone 15 for inputting voice at the time of a call, and (e) a guidance speaker 16 for generating ring alerts and guidance voice in response to commands from the control section 21. The mobile telephone 10 is equipped with (f) an antenna 17 connected to the transceiver section 22, for transferring wireless signals with the base station.

As shown in FIG. 2, control section 21 is equipped internally with an e-mail transmitting and receiving signal processor 26 for carrying out processing for transmitting and receiving e-mail. The e-mail transmitting and receiving signal processor 26 is equipped with an automatic transmission retry section for automatically re-trying e-mail transmission as described in the following when an e-mail transmission failure occurs.

In this embodiment, control section 21 is equipped with a central processing unit (CPU) and digital signal processor (DSP) and so forth for carrying out various data processing for implementing mobile telephone functions, which includes signal processing for transmission and receipt of e-mail, and for carrying out control of operations of other elements of the configuration described above. The e-mail transmitting and receiving signal processor 26 described above is constructed from a program executed by control section 21.

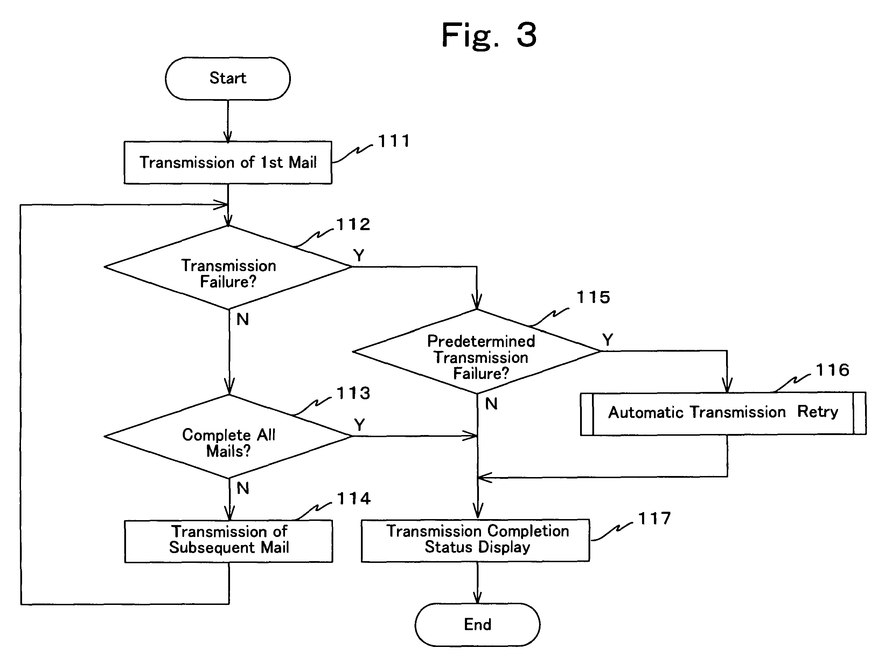

Next, a description is given with reference mainly to FIG. 3 to FIG. 7 of the operation of e-mail transmission by the mobile telephone 10 constructed in the above manner taking an example of the case of transmitting a plurality of e-mails consecutively.

Let it be assumed that a plurality of unsent e-mails are stored in storage section 23. It is then taken that a plurality of e-mails to be transmitted consecutively are selected in advance from unsent e-mail and the e-mail transmitting and receiving signal processor 26 is notified of this selection information. Further, the number of automatic retries is made a maximum of two in order to conform with recognized technological standards for electrical communication terminal equipment and so forth.

Consecutive transmission of the selected plurality of e-mails is started by operating the operating section 12 so as to carry out an instruction operation. When consecutive transmission of the plurality of selected e-mails starts, in step 111 in FIG. 3, the first e-mail transmission is carried out. During transmission of this e-mail, at first, e-mail transmitting and receiving signal processor 26 reads out the first e-mail from storage section 23. Continuing on, e-mail transmitting and receiving signal processor 26 transmits the read out e-mail to a network including a base station with which a wireless link is established via transceiver section 22. In this embodiment, e-mails are automatically transmitted one by one in the order in which the plurality of selected e-mails are made.

When the e-mail transmission operation in step 111 is completed, in step 112, it is determined whether or not transmission failure has occurred. If a negative determination, processing proceeds to step 113. In step 113, it is determined whether or not transmission of all e-mails selected as e-mails to be transmitted consecutively as described above is completed. If this determination is negative, processing advances to step 114.

In step 114, the following e-mail transmission is carried out. During e-mail transmission, as in the case of the first e-mail transmission described above, at first, e-mail transmitting and receiving signal processor 26 reads out the next e-mail from storage section 23. Continuing on, e-mail transmitting and receiving signal processor 26 transmits the read out e-mail to a network including a base station with which a wireless link is established via the transceiver section. After this, flow proceeds to step 112.

Thereafter, when a positive determination does not take place in step 112, processing is repeated from step 112 to step 114 until it is determined that transmission of all of the e-mails is completed in step 113. When a positive determination takes place in step 113, processing advances to step 117.

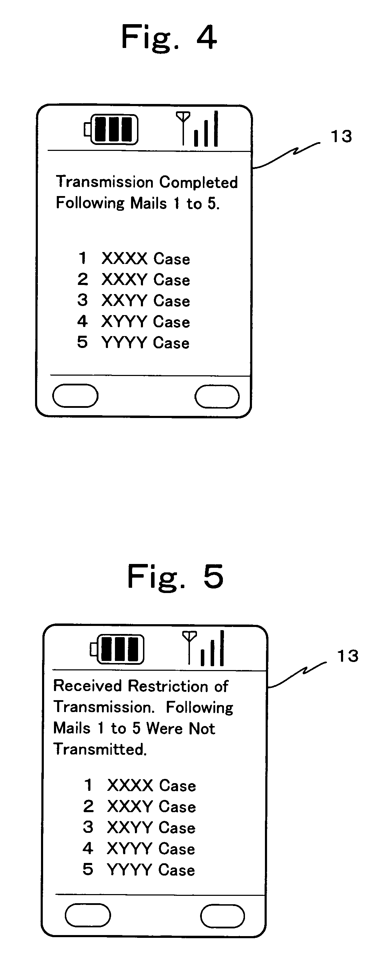

In step 117, transmission complete conditions for the e-mail are displayed at the display section 13 so as to give notification to the user. An example display for transmission complete conditions in the event that transmission of all the e-mails to be transmitted has completed without transmission failure occurring is shown in FIG. 4. In FIG. 4, an example is shown of the case where the number of e-mails to be transmitted consecutively is 5.

On the other hand, when a positive determination takes place in step 112, processing proceeds to step 115. In step 115, it is determined whether or not the type of transmission failure is a predetermined transmission failure intended for carrying out automatic transmission retry processing in the manner described in the following. In this embodiment, transmission failure caused by notification of a call restriction via a corresponding base station or notification of an access restriction when a disaster and so forth occurs in the vicinity is not included as a predetermined transmission failure. On the other hand, other transmission failures such as transmission failure caused, for example, by poor radio wave conditions are included in the predetermined transmission failures.

If the determination in step 115 is negative, processing proceeds to step 117, the transmission complete conditions for the e-mail are displayed at the display section 13 and users are notified. As described above, in the event that a transmission operation ends as a result of a transmission failure other than the predetermined transmission failures, in addition to the e-mail transmission complete information, the transmission failure type constituting the cause of completion of the transmission operation is displayed at the display section 13.
An example of a display in this case is shown in FIG. 5. In FIG. 5, an example is shown where the number of e-mails to be transmitted consecutively is 5 and e-mail cannot be sent as a result of call restrictions.

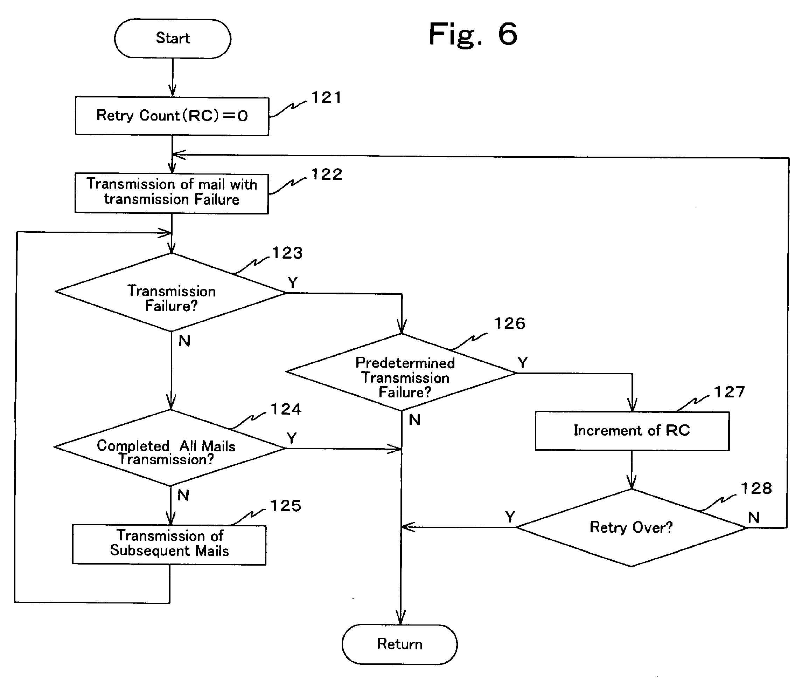

On the other hand, when a positive determination takes place in step 115, processing proceeds to step 116 (herein after referred to as "subroutine 116"). As shown in FIG. 6, at the subroutine 116, at first, in step 121, an automatic transmission retry section 27 sets the value of a retry count (RC) to 0.

Continuing on, in step 122, transmission of e-mail for which transmission failure has occurred is carried out. During transmission of this e-mail, at first, automatic transmission retry section 27 reads out e-mail for which transmission failure occurred from storage section 23. Continuing on, automatic transmission retry section 27 transmits the read out e-mail to a network including a base station with which a wireless link is established via the transceiver section.

When the e-mail transmission operation in step 122 is completed, in step 123, it is determined whether or not transmission failure has occurred. If a negative determination, processing proceeds to step 124. In step 124, it is determined whether or not transmission is completed for the e-mail subject to transmission failure on the previous occasion and all of the e-mail for which transmission was not started, when the transmission failure for the previous time occurred. If this determination is negative, processing proceeds to step 125.

In step 125, the following e-mail transmission is carried out. During e-mail transmission, as in the case of transmission of the e-mail for which transmission failure occurred described above, at first, the automatic transmission retry section 27 reads out the next e-mail from storage section 23. Continuing on, automatic transmission retry section 27 transmits the read out e-mail to a network including a base station with which a wireless link is established via the transceiver section. After this, the flow proceeds to step 123.

Thereafter, in the event that a positive determination does not take place in step 123, processing is repeated from step 123 to step 125 until it is determined that transmission of all of the e-mails is completed in step 124. When a positive determination does take place in step 124, processing of the subroutine is completed, and processing proceeds to step 117 of FIG. 3.

In step 117, as described above, transmission complete conditions for the e-mail are displayed at the display section 13 so as to give notification to the user. As described above, in the event that transmission of all of the e-mail intended to be transmitted is completed as a result of the automatic transmission retry, displaying is carried out at display section 13 in the same way as for the displaying shown in FIG. 4 described above.

Returning to FIG. 6, when a negative determination takes place in step 123, processing proceeds to step 126. In step 126, it is determined whether or not the type of transmission failure is the aforementioned predetermined transmission failure. If this determination is negative, processing of the subroutine 116 is completed, and processing proceeds to step 117 of FIG. 3. Then, in step 117, transmission complete conditions for the e-mail are displayed at the display section 13 so as to give notification to the user. In this kind of case, in the event that automatic transmission retry processing is completed as a result of transmission failure other than the predetermined transmission failure, displaying is carried out at the display section 13 in the same way as the displaying shown in FIG. 5 described above.

Returning to FIG. 6, when a positive determination takes place in step 126, processing proceeds to step 127. In step 127, the retry count (RC) is incremented. Continuing on, in step 128, a determination is made as to whether or not automatic transmission retry has been carried out for the maximum number of retry times, i.e. it is determined whether or not the number of retries has overflowed, based on the incremented retry count (RC) value. If this determination is negative, processing proceeds to step 112 and automatic transmission retry is started once again.

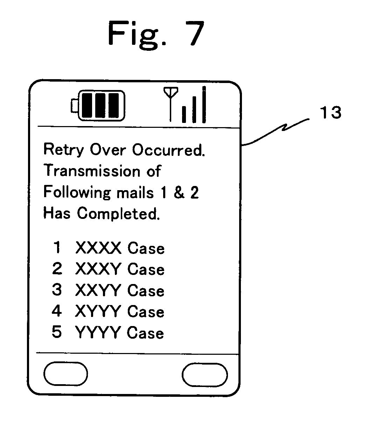

On the other hand, when a positive determination takes place in step 128, processing of the subroutine is completed, and processing proceeds to step 117 of FIG. 3. Then, in step 117, transmission complete conditions for the e-mail are displayed at the display section 13 so as to give notification to the user. In this kind of case, in the event that automatic transmission retry processing is completed as a result of retry overflow occurring, in addition to the e-mail transmission complete information, an indication that retry has overflowed is displayed at display section 13. An example of a display in this case is shown in FIG. 7. Note that, in FIG.7, it is illustrated that the number of e-mails is intended to send consecutively is 5, retry overflow occurs after completion of transmission of two e-mails, and the third e-mail onwards cannot be transmitted.

As described above, in this embodiment, in the event that the predetermined transmission failure occurs in consecutive transmission of a plurality of e-mails intended for transmission, consecutive transmission of e-mails for which the predetermined transmission failure has occurred and e-mails for which transmission was not started at the time of the occurrence of the predetermined transmission failure is tried automatically. As a result, in the event that a predetermined transmission failure occurs so that all of the e-mails it was intended to transmit cannot be transmitted, without any annoyance to the user, transmission of e-mails is attempted automatically with the exception of e-mails transmitted the first time for which transmission is completed. According to this embodiment, it is possible to improve convenience for the user of a mobile communication terminal during transmission of e-mail.

Further, transmission failures caused by communication restrictions notified via a base station are not included in predetermined transmission failures intended for automatic transmission retry. Because of this, it is possible to improve usefulness of use for the user in addition to outlining communication restrictions carried out for the public benefit via a base station.

Also, in the case of carrying out an automatic transmission retry, display of transmission failure is not carried out before this execution. As a result, the user is prevented from being troubled by the providing of information generated as a result of transmission failure that is not indispensable to the user.

Further, the number of times of automatic transmission retry is limited. This means that limitless repeating of automatic transmission retries and extended continuation of congestion in the case of communication congestion caused by transmission failure, as well as observance of public specifications and technological standards can be achieved.

Further, in the event that retry overflow occurs, transmission complete conditions for the e-mail are displayed and the user is notified. This means that it is possible for the user to be notified information that is important to the user such as transmission complete conditions for e-mail at the time of a retry overflow.

Note that, in the above embodiment, the number of e-mails initially to be transmitted consecutively is a plurality, but it is also possible to apply the case that the number of e-mails initially to be transmitted is one.

Further, e-mails to be transmitted consecutively may be short e-mails setting sessions for each e-mail transmission or may be messaging using line conversion (so-called long e-mail) that does not require setting of a session each e-mail transmission.

Also, in this embodiment, the mobile communication terminal is taken to be a portable telephone but the present invention may also be applied to other types of mobile communication terminal.

### Industrial Applicability

As described above, the e-mail transmission method of the present invention may be applied to e-mail transmission by a mobile communication terminal. Further, the mobile communication terminal of the present invention can be applied to mobile communication terminal having an e-mail transmission function.

## Claims

1. An e-mail transmission method where mobile communication terminal transmits e-mail, comprising the step of:
when predetermined transmission failure occurs in consecutive transmission of at least one e-mail to be transmitted, performing an automatic transmission retry to automatically try consecutive transmission of e-mail subjected to predetermined transmission failure and e-mail that does not start transmission at the time of the occurrence of the transmission failure.

2. The e-mail transmission method of claim 1, wherein
transmission failure causing communication restrictions notified to the mobile communication terminal are not included in the predetermined transmission failure.

3. The e-mail transmission method of claim 1, wherein
display of transmission failure is not carried out before execution of automatic transmission retry.

4. The e-mail transmission method of claim 1, wherein
the automatic transmission retry is executed repeatedly up to a predetermined maximum number of times.

5. The e-mail transmission method of claim 4, further comprising
a transmission completion displaying step of displaying an e-mail transmission completion state in the event that all of the at least one mail cannot be sent even if the automatic transmission retry step is repeated the predetermined number of times.

6. A transmission communication terminal having an e-mail transmission function, comprising
automatic transmission retry means for automatically trying consecutive transmission of e-mail subjected to predetermined transmission failure and e-mail that does not start transmission at the time of the occurrence of the transmission failure of at least one e-mail to be transmitted, in the event that transmission failure is detected within consecutive transmission of the at least one e-mail to be transmitted.
